# EUROPÄISCHE PATENTSCHRIFT

(11) **EP 3 186 789 B1**
(45) Veröffentlichungstag und Bekanntmachung des Hinweises auf die Patenterteilung: **23.04.2025**
(21) Anmeldenummer: 15763838.8
(22) Anmeldetag: 20.08.2015
(51) Int. Cl.: G07C 5/00, G07C 5/08, B62J 45/00, B62J 45/41, B62H 5/20, B62H 3/00, B62J 45/42

(54) **FAHRRAD-SERVICE-SYSTEM SOWIE FAHRRAD-SERVICE-VERFAHREN**
BICYCLE SERVICING SYSTEM AND BICYCLE SERVICING METHOD
SYSTÈME D'ENTRETIEN DE VÉLO ET PROCÉDÉ D'ENTRETIEN DE VÉLO

(30) Priorität: 26.08.2014 DE 102014216966
(43) Veröffentlichungstag der Anmeldung: 05.07.2017
(73) Patentinhaber: Deutsche Telekom AG, 53113 Bonn (DE)
(72) Erfinder: WEGERLE, Sebastian, 56182 Urbar (DE); ZEINDL, Benedikt, 94508 Schöllnach (DE); HÜLSMANN-TENNHOFF, Wilfried, 26123 Oldenburg (DE); RAU, Markus, 89233 Neu-Ulm (DE); LINDEMANN, Markus, 38154 Königslutter (DE); ECKERT, Thomas, 36103 Flieden (DE); LIPPMANN, Claudia, 53113 Bonn (DE); WINKLER, Jörg, 72587 Römerstein (DE)
(74) Vertreter: dompatent von Kreisler Selting Werner - Partnerschaft von Patent- und Rechtsanwälten mbB
(86) Internationale Anmeldenummer: PCT/EP2015/069127
(87) Internationale Veröffentlichungsnummer: WO 2016/030267

(56) Entgegenhaltungen:
- EP-A1- 2 450 717
- WO-A1-2010/092356
- WO-A1-2013/013325
- DE-A1- 102012 221 462
- DE-A1- 102013 002 655
- DE-A1- 19 619 899
- US-A1- 2002 158 754
- US-A1- 2002 174 077
- US-A1- 2007 158 949
- US-A1- 2008 027 794
- US-A1- 2011 133 542
- US-A1- 2014 209 400

## Beschreibung

Die Erfindung betrifft ein Fahrrad-Service-System sowie ein Fahrrad-Service-Verfahren.

Bei Fahrrädern, insbesondere bei stark belasteten Fahrrädern, ist es regelmäßig erforderlich, Wartungen durchzuführen, so dass beispielsweise in regelmäßigen Abständen die Bremsbeläge gewechselt, die Kette erneuert, Lager geschmiert etc. werden. Dies ist insbesondere bei sportlich genutzten Fahrrädern erforderlich. Es ist für den Benutzer wünschenswert, dass insbesondere während Wettbewerben und auch größerer Touren sichergestellt ist, dass insbesondere keine größeren Wartungen erforderlich sind.

Stand der Technik zu der vorliegenden Erfindung ist bspw. in US 2014/209400 A1, WO 2010/092356 A1, DE 10 2013 002 655 A1 und WO 2013/013325 A1 beschrieben.

Aufgabe der Erfindung ist es, ein Fahrrad-Service-System zu schaffen, mit dem insbesondere die Vornahme von Wartungen auf einfache Weise bestimmbar ist. Ferner ist es Aufgabe der Erfindung, ein entsprechendes Fahrrad-Service-System zu schaffen.

Die Lösung der Aufgabe erfolgt durch die Merkmale des Anspruchs 1 betreffend ein Fahrrad-Service-System sowie die Merkmale des Anspruchs 6 betreffend ein Fahrrad-Service-Verfahren.

Unabhängig oder zusätzlich zu der Forderung Wartung und Service zu vereinfachen besteht eine unabhängige Aufgabe darin, die Sicherheit zu erhöhen. Eine weitere unabhängige Aufgabe besteht darin, auf einfache Weise Tourdaten, Trainingsdaten und dergleichen dem Fahrer bereitzustellen.

Die vorliegende Erfindung ist in den Ansprüchen 1 und 6 definiert.

Das erfindungsgemäße Fahrrad-Service-System weist mindestens ein Fahrrad mit über Akku betriebenem Elektroantrieb und eine an dem Fahrrad angeordnete Sende- und Empfangseinrichtung auf. Ferner ist an dem Fahrrad, insbesondere unmittelbar am Fahrradrahmen, eine Fahrrad-Datenverarbeitungseinrichtung angeordnet. Diese ist mit der Sende- und Empfangseinrichtung verbunden. Die Sende- und Empfangseinrichtung dient zunächst dem Senden von Daten an eine stationäre Datenverarbeitungseinrichtung. Das Senden der Daten erfolgt durch mobile Datenübertragung, so dass es sich bei der stationären Datenverarbeitungseinrichtung um eine vom Fahrrad unabhängig, beispielsweise zentral angeordnete, stationäre Datenverarbeitungseinrichtung mit Computern etc. handeln kann. Die stationäre Datenverarbeitungseinrichtung dient zur Verarbeitung der von der Sende- und Empfangseinrichtung empfangenen Daten. Bei der Fahrrad-Datenverarbeitung handelt es sich insbesondere um eine sogenannte On Board Unit. Diese dient zur Ver- und Bearbeitung von Daten, die sodann über die Sende- und Empfangseinrichtungen an die stationäre Datenverarbeitungseinrichtung weiter gesandt werden. Bei den von der Fahrrad-Datenverarbeitung be- und verarbeiteten Daten kann es sich um Sensordaten, von einem Fahrrad-Computer ermittelte Daten, Tourdaten, fahrerspezifischen Daten, etc. handeln.

Erfindungsgemäß werden die von der stationären Datenverarbeitungseinrichtung verarbeiteten Daten wiederum über mobile Datenübertragung in einer bevorzugten Ausführungsform der Erfindung an eine Datenausgabeeinrichtung, insbesondere ein Mobiltelefon, ein Tablet oder dergleichen, übermittelt. An der Datenausgabeeinrichtung erfolgt die Ausgabe von den von der Datenverarbeitungseinrichtung übermittelten entsprechend verarbeiteten Daten.

Alternativ oder zusätzlich zu der Übermittlung der verarbeiteten Daten an eine Datenausgabeeinrichtung können die Daten auch insbesondere über das Internet an einen anderen Rechner bzw. Server übermittelt werden. Bei einer derartigen weiteren Datenverarbeitungseinrichtung handelt es sich beispielsweise um eine Datenverarbeitungseinrichtung eines Anbieters von Dienstleistungen. Beispielsweise kann es sich um einen Anbieter von Kartenmaterial handeln, der die von dem Fahrrad-Service-System erfassten Daten nutzt, um die Qualität des Datenmaterials zu verbessern, etc.

Zur zuverlässigen Datenübertragung weist die Sende- und Empfangseinrichtung vorzugsweise ein Modem, insbesondere ein GSM-Modem, auf. Die Übertragung der Daten erfolgt hier vorzugsweise an die Datenverarbeitungseinrichtung, wobei auch eine Vermittlung zumindest eines Teils der Daten direkt an die Datenausgabeeinrichtung in bevorzugter Ausführungsform möglich ist. Die Sende- und Empfangseinrichtung weist vorzugsweise eine Energiequelle auf. Hierbei kann es sich um einen Akku handeln, der beispielsweise mit einem Steckkontakt verbunden ist, um ein Ladegerät anzuschließen. Das Aufladen des Akkus könnte beispielsweise auch über Solarzellen oder über einen beispielsweise mit der Tretkurbel verbundenen Generator erfolgen.

Des Weiteren ist es bevorzugt, dass die Sende- und Empfangseinrichtung ein GPS-Modul aufweist bzw. mit einem GPS-Modul verbunden ist. Insbesondere durch die Verbindung mit einem GPS-Modul ist es möglich, eine Vielzahl von Daten zu empfangen bzw. zu bestimmen. Die GPS-Daten können durch die mobile Datenübertragung in großen Zeitabständen oder ununterbrochen an die Datenverarbeitungseinrichtung übermittelt werden. Die Datenverarbeitungseinrichtung kann aus den GPS-Daten u. a. die Geschwindigkeit, die zurückgelegte Strecke, den Track, das Höhenprofil etc. ermitteln. Diese Daten können sodann mit Hilfe des erfindungsgemäßen Systems an die Datenausgabeeinrichtung übermittelt werden. Mit Hilfe der Datenausgabeeinrichtung, bei der es sich insbesondere um ein Mobiltelefon handelt, kann der Fahrer die entsprechenden Daten auf einfache Weise abrufen.

Bereits beim Vorsehen eines GPS-Moduls ist es möglich, dass die Datenverarbeitungseinrichtung Wartungszyklen ermittelt. Diese können beispielsweise lediglich abhängig von einer gewissen Kilometerleistung sein. Zusätzlich können von entsprechenden Algorithmen aber auch die gefahrenen Höhenmeter und ggf. sogar die Steigung berücksichtigt werden. Mit einem entsprechenden Algorithmus könnte beispielsweise berücksichtigt werden, dass die Kette und die Bremsbeläge in Abhängigkeit der gefahrenen Höhenmeter und der Steigung ggf. stärker beansprucht werden, so dass ein Service oder eine Wartung bereits bei einer geringeren Kilometerleistung zu empfehlen ist. Im Übrigen ist es besonders bevorzugt, dass die Ermittlung von Wartungszyklen unabhängig von der Dateneingabe eines Benutzers erfolgt. Die Ermittlung von Wartungszyklen oder ähnlichen Informationen erfolgt vorzugsweise ausschließlich anhand automatisch von dem System ermittelten Daten.

Insbesondere bei der Übermittlung von Wartungsempfehlungen ist es möglich, zusätzlich Daten zu übermitteln, die beispielsweise die fahrradspezifischen Bremsbeläge, die vorhandene Kette etc. betreffen. Dies ist möglich, sofern entsprechende Angaben einmal vom Benutzer oder bereits werksseitig eingegeben wurden. Des Weiteren ist es möglich, den Fahrer unmittelbar auf eine Internetseite zu leiten, auf der die für die Wartung erforderlichen Ersatzteile bestellt werden können. Zusätzlich können dem Fahrer hier beispielsweise Montage- oder Wartungsanleitungen über das Internet zur Verfügung gestellt werden.

Bei einer weiteren bevorzugten Ausführungsform des Fahrrad-Service-Systems sind am Fahrrad Sensoren angeordnet. Diese dienen insbesondere zur Ermittlung fahrradspezifischer Daten. Hierbei kann es sich um einen am Vorderrad oder Hinterrad angeordneten Sensor zur Geschwindigkeitsermittlung, einem REED-Sensor zur Ermittlung der Tretkurbelbewegung, Steigungssensoren und dergleichen handeln. Die entsprechenden fahrradspezifischen Daten werden von den Sensoren an die Fahrrad-Datenverarbeitungseinrichtung übertragen und von dieser gegebenenfalls ver- oder bearbeitet und sodann an die Sende- bzw. Empfangseinrichtung übermittelt. Von dieser werden die Daten an die stationäre Datenverarbeitungseinrichtung zur Weiterverarbeitung übermittelt. Des Weiteren können insbesondere drahtlos fahrerspezifische Daten, wie beispielsweise der Puls, ermittelt und ebenfalls an die Datenverarbeitungseinrichtung weitergeleitet werden. Beispielsweise kann ein Beschleunigungssensor vorgesehen werden. Durch diesen kann der Untergrund auf dem das Fahrrad bewegt wird ermittelt werden. Durch das Vorsehen eines Magnetfeldsensors ist es beispielsweise möglich festzustellen, ob das Fahrrad auf Beton oder einer Brücke bewegt wird.

Insbesondere ist es möglich, am Fahrrad einen Sensor zur Ermittlung eines Sturzes vorzusehen. Hierbei kann es sich beispielsweise um einen Sensor handeln, der die Erschütterung detektiert. Insbesondere wenn ein Fahrradfahrer alleine unterwegs ist, kann hierdurch die Sicherheit erheblich erhöht werden. Bei der Detektion eines Sturzes kann unmittelbar ein Notruf abgesetzt werden. Dies kann über die stationäre Datenverarbeitungseinrichtung oder unmittelbar über ein mitgeführtes Mobiltelefon bzw. die Sende- und Empfangseinrichtung selbst erfolgen. Hierbei ist es bevorzugt, dass unmittelbar auch GPS-Daten an die entsprechende Notrufzentrale übermittelt werden. Des Weiteren könnte von der Notrufzentrale automatisch ein Rückruf aktiviert werden, um den Fahrer zu kontaktieren und die gegebenenfalls erforderlichen Rettungsmaßnahmen einzuleiten.

Ein Fahrrad-Service-Verfahren, das in bevorzugter Ausführungsform mit dem vorstehend beschriebenen Fahrrad-Service-System durchgeführt wird, erfasst in einem ersten Schritt fahrrad- und/oder fahrerspezifische Daten. Die Datenerfassung erfolgt insbesondere wie vorstehend anhand des Fahrrad-Service-Systems beschrieben über am Fahrrad oder am Fahrer angeordnete Sensoren, ein GPS-Modul und dergleichen. Die erfassten Daten werden sodann zunächst an die am Fahrrad angeordnete Fahrrad-Datenverarbeitungseinrichtung übermittelt. Durch diese erfolgt eine Ver- oder Bearbeitung der Daten. Anschließend werden die Daten an eine stationäre Datenverarbeitungseinrichtung durch mobile Datenübertragung zur weiteren Verarbeitung übermittelt. Die weiterverarbeiteten Daten werden sodann an eine Datenausgabeeinrichtung wiederum durch mobile Datenübertragung übermittelt und über die Datenausgabeeinrichtung ausgegeben. Alternativ oder zusätzlich zur Ausgabe von Daten an einer Datenausgabeeinrichtung, erfolgt ein Weiterleiten der Daten von der stationären Datenverarbeitungseinrichtung an eine weitere Datenverarbeitungseinrichtung, beispielsweise einen Server eines Dienstleisters. Durch diesen erfolgt die Weiterverarbeitung der Daten, wobei auch diese Daten gegebenenfalls wiederum an die Datenausgabeeinrichtung des Nutzers bzw. des Fahrradfahrers übertragen werden können. Dies erfolgt insbesondere wie vorstehend anhand des Fahrrad-Service-Systems beschrieben. Mit Hilfe des Verfahrens werden insbesondere Geodaten, übliche Tachodaten wie Geschwindigkeit, Steigung etc. sowie auch Tretkurbeldaten betreffend die Kurbelbewegung, übermittelt.

Auf Basis der übermittelten Daten und gegebenenfalls in der Fahrrad-Datenverarbeitungseinrichtung und/oder der stationären Datenverarbeitungseinrichtung zusätzlich hinterlegter Daten, werden Daten betreffend durchzuführende Wartungen und dergleichen an die Datenausgabeeinrichtung und/oder die weitere Datenverarbeitungseinrichtung übermittelt. An diese werden vorzugsweise die üblichen Tachodaten, Statistiken, Trekkingdaten etc. übermittelt. Über das insbesondere mobile Datenausgabegerät können weiterhin Daten zur unmittelbaren Bestellung von Ersatzteilen, Montage- und Wartungsanleitungen und dergleichen zur Verfügung gestellt werden.

Besonders bevorzugt ist es, dass die Datenaufnahme und/oder die Datenverarbeitung und/oder die Datenübermittlung automatisch gestartet werden, sobald das Fahrrad bewegt wird. Über die vorhandenen Sensoren kann auf einfache Weise detektiert werden, dass das Fahrrad bewegt wird. Dies kann mit Hilfe des GPS-Moduls, des REED-Sensors, des Geschwindigkeitssensors und dergleichen erfolgen.

Des Weiteren ist es bevorzugt, dass mit Hilfe des Fahrrad-Service-Verfahrens wie vorstehend anhand des Systems beschrieben Sturzdaten erfasst werden und unmittelbar ein Notruf abgesetzt wird.

Gemäß des erfindungsgemäßen Fahrrad-Service-Systems und des erfindungsgemäßen Fahrrad-Service-Verfahrens ist die Fahrrad-Datenverarbeitungseinrichtung dazu eingerichtet, den Ladezustand des Akkus und generelle Zustandsdaten des Akkus zu berücksichtigen und zu übermitteln, so dass ein Sinken der Ladekapazität des Akkus aufgrund seines Alters festgestellt und dem Benutzer ein rechtzeitiger Austausch des Akkus vorgeschlagen werden kann.

Gemäß des erfindungsgemäßen Fahrrad-Service-Systems und des erfindungsgemäßen Fahrrad-Service-Verfahrens ist die Sende- und Empfangseinrichtung im Oberrohr und/oder im Sattelstützrohr des Fahrrads und/oder einem entsprechenden Verbindungselement zwischen diesen beiden Rahmenelementen angeordnet. Dies hat den Vorteil, dass die Sende- und Empfangseinrichtung einfach zugänglich ist. Insofern ist es möglich, in diesem Bereich einen Stecker zum Anstecken eines Ladekabels für einen integrierten Akku, einen USB-Stecker und dergleichen, vorzusehen. Auch ist es möglich, die Sende- und Empfangseinrichtung über insbesondere im Rahmen verlegte Leitungen mit den entsprechenden Sensoren zu verbinden.

Ein wesentlicher Aspekt der Erfindung besteht darin, dass ein automatisches Erfassen und Überwachen von Serviceintervallen möglich ist. Insbesondere muss der Nutzer keine Serviceintervalle manuell festlegen, vielmehr erfolgt die Ermittlung anhand voreingegebener Daten, verbauter Bauteile, sowie auf Grund von bekannten Daten von nachträglich gekauften Teilen bzw. Ersatzteilen. Es erfolgt somit eine automatische radspezifische Ermittlung von Serviceintervallen, die wie vorstehend beschrieben insbesondere auch abhängig von der Art der Nutzung des Fahrrads gemacht werden kann. Eine Benachrichtigung des Nutzers kann hierbei nicht nur über eine Datenausgabeeinrichtung wie ein Smartphone oder dergleichen, sondern beispielsweise auch über Versenden einer E-Mail, über Übermitteln der Daten an einen Fahrradcomputer oder dergleichen erfolgen.

Ein weiterer wesentlicher Aspekt der Erfindung besteht darin, dass in bevorzugter Ausführungsform Teile und Komponenten des Fahrrads mittels Sensoren am oder im Rad automatisch überwacht werden und die erfassten Daten automatisch an die Fahrrad-Datenverarbeitungseinrichtung, insbesondere die On Board Unit übertragen werden. Eine Auswertung der Daten erfolgt sodann gegebenenfalls bereits zumindest teilweise in der On Board Unit oder sodann in der stationären oder weiteren Datenverarbeitungseinrichtung. Ein Eingriff des Nutzers ist hierbei vorzugsweise nicht erforderlich. Neben den vorstehend beschriebenen Sensoren sind beispielsweise auch Reifendrucksensoren, Sensoren in der Schaltung, Messstreifen im Rahmen, etc. möglich.

Eine weitere Betriebsmöglichkeit der Erfindung besteht darin diese als Diebstahlsicherung zu nutzen. Hierzu ist es beispielsweise möglich, dass sich der Besitzer des Fahrrads vor dessen Benutzung autorisieren muss. Dies kann beispielsweise mit Hilfe eines Smartphones, eines einzugebenden Pins und dergleichen erfolgen. Erfolgt eine derartige Autorisierung nicht, würde das Fahrrad bei Erhalt eines Diebstahlimpulses, das heißt beispielsweise wenn es bewegt wird, entsprechende Diebstahlsignale versenden. Hierbei kann insbesondere die Mitteilung von Positionsdaten erfolgen, sodass ein Tracking etc. möglich ist.

Die Fahrrad-Datenverarbeitungseinrichtung, selbst insbesondere die On Board Unit, kann auch als autark betriebene Einheit genutzt werden, wobei es sich hierbei um eine selbstständige Erfindung handelt. Eine derartige Fahrrad-Datenverarbeitungseinrichtung ist mit insbesondere mehreren Sensoren verbunden und verarbeitet die empfangenen Daten unmittelbar. Die gespeicherten Daten können sodann beispielsweise über eine Schnittstelle oder auch über W-LAN ausgelesen werden. Eine entsprechende Auswertung der Daten kann sodann auf dem privaten PC oder durch eine Übertragung zu stationären Datenverarbeitungseinrichtungen wie Servern des Internets erfolgen.

Das erfindungsgemäße Fahrrad-Service-System betrifft E-Bikes bzw. Fahrräder mit Elektroantrieb. Die am Fahrrad angeordnete Sende- und Empfangseinrichtung ist mit der Fahrrad-Datenverarbeitungseinrichtung verbunden, wobei diese auch den Zustand des Akkus mitberücksichtigt. Hierbei wird nicht nur der Ladezustand des Akkus, sondern auch generelle Zustandsdaten des Akkus berücksichtigt und übermittelt. Sofern die Ladekapazität des Akkus aufgrund seines Alters sinkt, kann dies festgestellt und ein rechtzeitiger Austausch des Akkus dem Benutzer vorgeschlagen werden. Da moderne Elektroantriebe über Software gesteuert werden, besteht ein weiterer erheblicher Vorteil der Erfindung darin, dass diese Software auf einfache Weise aktualisiert werden kann. Dies kann über die mit dem Fahrrad verbundene Sende- und Empfangseinrichtung erfolgen. Insbesondere ist es somit zur Software-Aktualisierung nicht erforderlich, die Werkstatt oder den Fahrradhändler aufzusuchen oder eine kabelgebundene Verbindung mit dem Internet herzustellen.

Eine weitere vorteilhafte Anwendungsmöglichkeit des erfindungsgemäßen Fahrrad-Service-Systems besteht im Flottenmanagement. Beispielsweise können Fahrradverleih-Firmen die insbesondere für Service-Intervalle erforderlichen Daten jederzeit abfragen. Über eine geeignete Software könnte sodann sichergestellt werden, dass die Fahrräder der gesamten Flotte jeweils rechtzeitig gewartet werden. Hierbei kann eine Vielzahl von gemessenen Daten wie die gefahrene Strecke etc. berücksichtigt werden.

Ein derartiges Flottenmanagement ist insbesondere auch bei Fahrrädern mit Elektroantrieb vorteilhaft. Beispielsweise werden die Akkus derartiger E-Bikes bei größeren Flotten heute in regelmäßigen Abständen von beispielsweise 1,5 Jahren gewechselt. Hierbei handelt es sich um eine Vorsichtsmaßnahme, die den tatsächlichen Zustand des Akkus jedoch nicht berücksichtigt. Bei der Erfassung entsprechender Akku-Daten kann beispielsweise die Alterung eines Akkus individuell überprüft werden. Dies führt dazu, dass der Akku tatsächlich erst ausgetauscht wird, wenn dies erforderlich ist.

Generell kann neben der Erfassung von Nutzungszeiten und -strecken beispielsweise eine Streckenoptimierung erfolgen. Dies ist beispielsweise für Briefzustelldienste vorteilhaft.

Neben dem Einsatz des Fahrrad-Service-Systems für den Direktvertrieb von Fahrrädern ist das System auch für Händler vorteilhaft, da hierdurch ein zweistufiger Vertrieb gefördert werden kann. Die Kommunikation zwischen Händler und Kunde kann hiermit deutlich verbessert werden. Werden die entsprechenden vom Fahrrad-Service-System erfassten Daten an den Händler übermittelt, so kann dieser beispielsweise dem Kunden automatische Wartungshinweise geben. Auch kann ein Händler beispielsweise bei Pannen schneller helfen. Ferner ist das Auflegen von Bonusprogrammen möglich. Auch eine exakte Kenntnis über die tatsächliche Nutzung des Fahrrads kann dem Kunden bereitgestellt werden. Dies ist insbesondere bei Stadträdern von Interesse, da der Kunde die tatsächliche Nutzung eines Fahrrads häufig nicht kennt und diese meist unterschätzt. Dies führt dazu, dass beispielsweise die Kette, Bremsbeläge und dergleichen häufig zu spät gewechselt werden, so dass Folgeschäden auftreten können.

Nachstehend wird die Erfindung anhand einer bevorzugten Ausführungsform unter Bezugnahme auf die anliegenden Zeichnungen näher erläutert.

Es zeigen:
- Figur 1: eine schematische Prinzipskizze des Fahrrad-Service-Systems und
- Figur 2: eine schematische Darstellung einer möglichen Anordnung der Sende- und Empfangseinheit im Fahrradrahmen.

Das erfindungsgemäße Fahrrad-Service-System umfasst eine Sende- und Empfangseinrichtung 10, die beispielsweise in einem Fahrradrahmen 12 integriert ist. Die Empfangseinrichtung 10 ist mit einer Fahrrad-Datenverarbeitungseinrichtung 8 verbunden. Die Sende- und Empfangseinrichtung 10 übermittelt Daten, via mobile Datenübertragung wie durch einen Pfeil 14 dargestellt, an eine stationäre Datenverarbeitungseinrichtung 16. Die insbesondere lokale nicht mobile Datenverarbeitungseinrichtung umfasst ebenfalls Sende- und Empfangseinrichtungen sowie Verarbeitungseinrichtungen wie Computer und dergleichen. Optional ist auch eine Datenübertragung von der Datenverarbeitungseinrichtung 16 an die Sende- und Empfangseinrichtung 10 möglich.

Die Fahrrad-Datenverarbeitungseinrichtung 8 ist beispielsweise über elektrische Leitungen 42, 44 mit unterschiedlichen am Fahrrad und/oder am Fahrer angeordneten Sensoren verbunden. Die entsprechende Verbindung kann auch drahtlos ausgeführt sein.

Zunächst erfolgt in bevorzugter Ausführungsform eine Ver- oder Bearbeitung der von den Sensoren erfassten Daten mit Hilfe der Fahrrad-Datenverarbeitungseinrichtung 8. Die ver- bzw. bearbeiteten Daten werden sodann von der Sende- oder Empfangseinrichtung 10 an die Datenverarbeitungseinrichtung 16 bzw. einen Server des Internets übermittelt.

Üblicherweise werden die ver- bzw. bearbeiteten Daten von der Datenverarbeitungseinrichtung 16 an ein Datenausgabegerät 18, wie ein Mobiltelefon, übermittelt. Die Daten werden hierbei wiederum über mobile Datenübertragungen wie durch den Pfeil 20 dargestellt, übermittelt, wobei es wiederum optional möglich ist, dass auch Daten von der Datenausgabeeinrichtung 18 an die Datenverarbeitungseinrichtung 16 übermittelt werden. Hierbei kann es sich beispielsweise um Daten handeln, die vom Benutzer eingegeben werden oder auch um Daten, die ein einwandfreies Empfangen der übermittelten Daten bestätigen etc.

Die auf dem Mobiltelefon 18 ausgegebenen Daten betreffen beispielsweise Trekkingdaten, Daten über die Strecke, die Durchschnittsgeschwindigkeit, die Maximalgeschwindigkeit, die durchschnittlichen maximalen Steigungen etc. sowie gegebenenfalls hieraus ermittelte Statistiken oder Übersichten. Die Darstellungen können selbstverständlich auch in Form von Darstellungen auf einer Landkarte, Höhenprofilen, Kurven, Graphen, etc. erfolgen.

Insbesondere erfolgt durch die Datenverarbeitungseinrichtung ein Ermitteln von Wartungsdaten, vorzugsweise auf Basis von hinterlegten fahrradspezifischen Daten. Hierbei handelt es sich beispielsweise um die am entsprechenden Fahrrad verbauten Bremsbeläge, die eingebaute Kette, den Typ des Fahrrads (Rennrad, Mountainbike, Trekkingrad etc.) und dergleichen. Mit Hilfe des Mobiltelefons 18 oder einer entsprechenden Datenausgabeeinrichtung kann wie üblich über eine mobile Datenübertragung oder eine Verbindung mit dem Internet 16 hergestellt werden. Dies hat den Vorteil, dass beispielsweise unmittelbar Verknüpfungen zu einem Bestellmodul, Service- und Montageanleitungen und dergleichen realisiert werden können.

Die Datenverarbeitungseinrichtung 16, wie beispielsweise ein Server des Fahrradherstellers oder dergleichen, kann die empfangenen und gegebenenfalls weiterverarbeiteten Daten an eine weitere Datenverarbeitungseinrichtung 24 übermitteln. Hierbei kann es sich um einen Anbieter von Serviceleistungen handeln, der die entsprechenden Daten hierzu nutzt.

Des Weiteren ist es möglich, dass die Sende- und Empfangseinrichtung 10 GPS-Daten (Pfeil 26) empfängt und an die Datenverarbeitungseinrichtung übermittelt.

Insbesondere über am Fahrrad vorgesehene Sensoren können weitere Daten aufgenommen und über die Sende- und Empfangseinrichtung an die Datenverarbeitungseinrichtung übermittelt werden. Eine erfindungsgemäße Besonderheit besteht darin, dass mindestens ein Sensor vorgesehen sein kann, der einen Sturz detektiert. Der Sensor kann beispielsweise eine starke Erschütterung detektieren. Im Falle eines Sturzes wird sodann unmittelbar ein Notruf abgesetzt. Dieser kann unmittelbar an eine Notrufzentrale 28 wie durch den Pfeil 30 dargestellt, erfolgen. Selbstverständlich kann der Notruf auch über die Datenverarbeitungseinrichtung 16 (Pfeil 33) und/oder das Mobiltelefon 18 (Pfeil 32) erfolgen. Insbesondere im Fall eines Notrufs kann auch eine direkte Kommunikation zwischen der Sende- und Empfangseinrichtung 10 und dem Mobiltelefon 18 erfolgen.

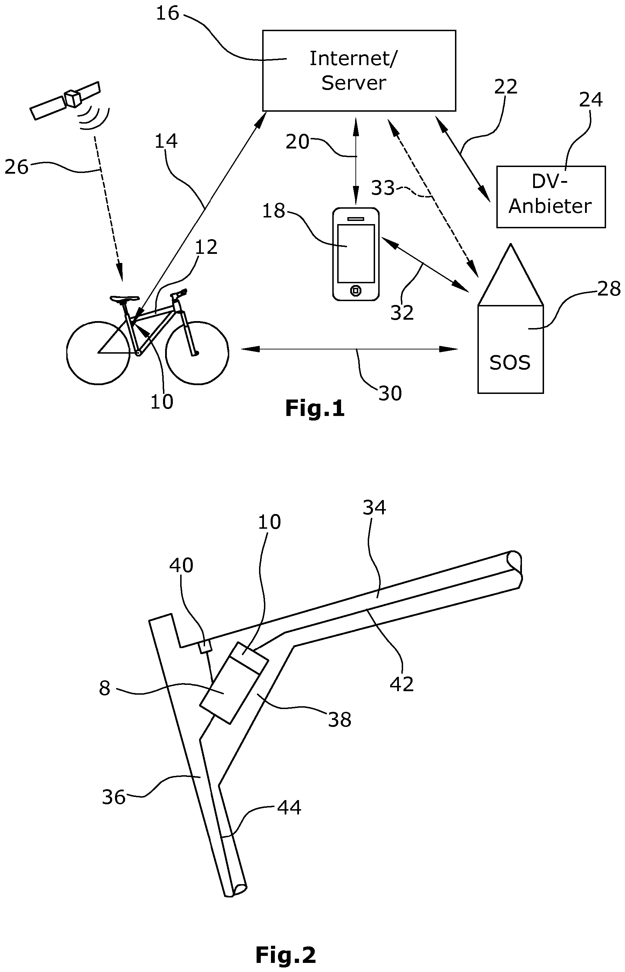

Die Sende- und Empfangseinrichtung 10 ist erfindungsgemäß in dem Fahrradrahmen 12 integriert. Besonders geeignet ist die Anordnung in einem Oberrohr 34 oder einem Sattelstützrohr 36 (Figur 2). Da die Sende- und Empfangseinrichtung gegebenenfalls etwas mehr Raum erfordert, kann die Sende- und Empfangseinrichtung 10 auch in einem Verbindungselement 38 zwischen dem Oberrohr 34 und dem Sattelstützrohr 36 angeordnet sein. In diesem Bereich ist es ferner auf einfache Weise möglich, beispielsweise einen Steckkontakt 40 zum Anstecken eines Ladegeräts oder einen USB-Stecker und dergleichen vorzusehen. Die Sende- und Empfangseinrichtung 10 ist beispielsweise über elektrische Leitungen 42, 44 mit Sensoren verbunden. Auch kann über eine entsprechende Leitung eine Verbindung mit einer Antenne vorgesehen sein, um diese zu einer möglichst fehlerfreien Datenübertragung an einem entsprechenden Bereich des Fahrradrahmens anzuordnen. Auch kann die Sende- und Empfangseinrichtung 10 über entsprechende Leitungen mit einem beispielsweise im Tretlager angeordneten Stromgenerator verbunden sein.

## Patentansprüche

1. Fahrrad-Service-System für Fahrräder mit über Akku betriebenem Elektroantrieb, mit
- mindestens einem Fahrrad (12) mit über Akku betriebenem Elektroantrieb,
- einer am Fahrrad (12) angeordneten Sende- und Empfangseinrichtung (10),
- einer am Fahrrad (12) angeordneten mit der Sende- und Empfangseinrichtung (10) verbundenen Fahrrad-Datenverarbeitungseinrichtung (8),
- einer mit der Sende- und Empfangseinrichtung (10) durch mobile Datenübertragung (14) verbindbaren stationären Datenverarbeitungseinrichtung (16) zur Verarbeitung von von der Sende- und Empfangseinrichtung (10) empfangenen, insbesondere fahrrad- und/oder fahrerspezifischen Daten, und
- einer mit der Datenverarbeitungseinrichtung (16) durch mobile Datenübertragung (20) verbindbaren Datenausgabeeinrichtung (18) zur Ausgabe von von der Datenverarbeitungseinrichtung (16) übermittelten Daten und/oder
- einer mit der Datenverarbeitungseinrichtung (16) durch Datenübertragung verbindbaren weiteren Datenverarbeitungseinrichtung (24) zur Weiterverarbeitung der von der Datenverarbeitungseinrichtung (16) übermittelten Daten,
**dadurch gekennzeichnet, dass**
- die Fahrrad-Datenverarbeitungseinrichtung (8) dazu eingerichtet ist, den Ladezustand des Akkus und generelle Zustandsdaten des Akkus zu berücksichtigen und zu übermitteln, so dass ein Sinken der Ladekapazität des Akkus aufgrund seines Alters festgestellt und dem Benutzer ein rechtzeitiger Austausch des Akkus vorgeschlagen werden kann, und
- die Sende- und Empfangseinrichtung (10) in einem Oberrohr (34) und/oder einem Sattelstützrohr (36) des Fahrrads (12) und/oder einem das Oberrohr (34) und das Sattelstützrohr (36) verbindenden Verbindungselement (38) angeordnet, und damit im Fahrradrahmen des Fahrrads (12) integriert ist.

2. Fahrrad-Service-System nach Anspruch 1, **dadurch gekennzeichnet, dass** die Sende- und Empfangseinrichtung (10) ein Modem, insbesondere ein GSM-Modem, zum Senden und Empfangen von Daten an die und von der stationären Datenverarbeitungseinrichtung (16) aufweist.

3. Fahrrad-Service-System nach Anspruch 1 oder 2, **dadurch gekennzeichnet, dass** die Sende- und Empfangseinrichtung (10) und die Fahrrad-Datenverarbeitungseinrichtung (8) eine Energiequelle aufweist.

4. Fahrrad-Service-System nach einem der Ansprüche 1 - 3, **dadurch gekennzeichnet, dass** die Sende- und Empfangseinrichtung ein GPS-Modul aufweist bzw. mit einem GPS-Modul verbunden ist.

5. Fahrrad-Service-System nach einem der Ansprüche 1 - 4, **dadurch gekennzeichnet, dass** die Fahrrad-Datenverarbeitungseinrichtung (8) mit am Fahrrad angeordneten Sensoren zur Aufnahme fahrradspezifischer Daten verbunden ist und optional mit am Fahrer anzuordnenden Sensoren zur Aufnahme fahrerspezifischer Daten verbindbar ist.

6. Fahrrad-Service-Verfahren für Fahrräder mit über Akku betriebenem Elektroantrieb mit den Schritten:
- Erfassen von fahrradspezifischen und/oder fahrerspezifischen Daten, insbesondere mittels am Fahrradrahmen und/oder am Fahrer angeordneten Sensoren,
- Übermitteln der Daten an eine an einem Fahrrad (12) mit über Akku betriebenem Elektroantrieb angeordnete Fahrrad-Datenverarbeitungseinrichtung (8),
- Übermitteln der Daten mittels einer mit der Fahrrad-Datenverarbeitungseinrichtung (8) verbundenen Sende- und Empfangseinrichtung (10) durch mobile Datenübertragung (14) an eine stationäre Datenverarbeitungseinrichtung (16),
- Übermitteln der von der stationären Datenverarbeitungseinrichtung (16) verarbeiteten Daten an eine Datenausgabeeinrichtung (18) durch mobile Datenübertragung (20) und/oder an eine weitere Datenverarbeitungseinrichtung (24) durch Datenübertragung (22) und
- Ausgeben der Daten mittels der Datenausgabeeinrichtung (18) bzw. Weiterverarbeiten der Daten mittels der weiteren Datenverarbeitungseinrichtung (24)
**dadurch gekennzeichnet, dass**
- die Fahrrad-Datenverarbeitungseinrichtung (8) dazu eingerichtet ist, den Ladezustand des Akkus und generelle Zustandsdaten des Akkus zu berücksichtigen und zu übermitteln, so dass ein Sinken der Ladekapazität des Akkus aufgrund seines Alters festgestellt und dem Benutzer ein rechtzeitiger Austausch des Akkus vorgeschlagen werden kann, und
- die Sende- und Empfangseinrichtung (10) in einem Oberrohr (34) und/oder einem Sattelstützrohr (36) des Fahrrads (12) und/oder einem das Oberrohr (34) und das Sattelstützrohr (36) verbindenden Verbindungselement (38) angeordnet, und damit im Fahrradrahmen des Fahrrads (12) integriert ist.

7. Fahrrad-Service-Verfahren nach Anspruch 6, wobei die von der Sende- und Empfangseinrichtung (10) an die stationäre Datenverarbeitungseinrichtung (16) übermittelten Daten Geodaten, Geschwindigkeitsdaten und/oder Tretkurbeldaten umfassen.

8. Fahrrad-Service-Verfahren nach Anspruch 6 oder 7, wobei die Datenaufnahme und/oder die Datenverarbeitung und/oder die Datenübermittlung automatisch gestartet werden, sobald das Fahrrad bewegt wird.

9. Fahrrad-Service-Verfahren nach einem der Ansprüche 6 bis 8, bei welchem sobald Sturzdaten, insbesondere von der Fahrrad-Datenverarbeitungseinrichtung (8) erfasst werden, ein Notruf abgesetzt wird.

## Claims

1. A bicycle servicing system for bicycles having an electric drive powered by a battery, comprising
- at least one bicycle (12) having an electric drive powered by a battery,
- a transceiver device (10) arranged on the bicycle (12),
- a bicycle data processing device (8) arranged on the bicycle (12) and connected with the transceiver device (10),
- a stationary data processing device (16) for processing in particular bicycle- and/or cyclist-specific data received from the transceiver device (10), the data processing device being adapted to be connected with the transceiver device (10) by mobile data transmission (14), and
- a data output device (18) for outputting data transmitted from the data processing device (16), said data output device being adapted to be connected with the data processing device (16) by mobile data transmission (20), and/or
- a further data processing device (24) for a further processing of the data transmitted from the data processing device (16), said further data processing device being adapted to be connected with the data processing device (16) by data transmission,
**characterized in that**
- the bicycle data processing device (8) is configured to consider and transmit the charging state of the battery and general status data of the battery, so that a decrease in the charging capacity of the battery due to its age can be detected and a timely replacement of the battery can be suggested to the user, and
- the transceiver device (10) is arranged in a top tube (34) and/or a seat tube (36) of the bicycle (12) and/or a connecting element (38) connecting the top tube (34) and the seat tube (36), and thus is integrated in the bicycle frame of the bicycle (12).

2. The bicycle servicing system according to claim 1, **characterized in that** the transceiver device (10) comprises a modem, in particular a GSM modem, for transmitting and receiving data to and from the stationary data processing device (16).

3. The bicycle servicing system according to claim 1 or 2, **characterized in that** the transceiver device (10) and the bicycle data processing device (8) comprise a power source.

4. The bicycle servicing system according to any one of claims 1 - 3, **characterized in that** the transceiver device comprises a GPS module or is connected with a GPS module.

5. The bicycle servicing system according to any one of claims 1 - 4, **characterized in that** the bicycle data processing device (8) is connected with sensors to be arranged on the bicycle for obtaining bicycle-specific data and is optionally adapted to be connected to sensors be arranged on the cyclist for obtaining cyclist-specific data.

6. The bicycle servicing method for bicycles having an electric drive powered by a battery, comprising the following steps:
- obtaining bicycle- specific and/or cyclist-specific data, in particular by means of sensors arranged on the bicycle frame and/or the cyclist,
- transmitting the data to a bicycle data processing device (8) arranged on a bicycle (12) having an electric drive powered by a battery,
- transmitting the data by means of a transceiver device (10) by mobile data transmission (14) to a stationary data processing device (16), the transceiver device being connected with the bicycle data processing device (8),
- transmitting the data processed by the stationary data processing device (16) to a data output device (18) by mobile data transmission (20) and/or to the further data processing device (24) by data transmission (22), and
- outputting the data by means of the data output device (18) or processing the data further by the further data processing device (24),
**characterized in that**
- the bicycle data processing device (8) is configured to consider and transmit the charging state of the battery and general status data of the battery, so that a decrease in the charging capacity of the battery due to its age can be detected and a timely replacement of the battery can be suggested to the user, and
- the transceiver device (10) is arranged in a top tube (34) and/or a seat tube (36) of the bicycle (12) and/or a connecting element (38) connecting the top tube (34) and the seat tube (36), and thus is integrated in the bicycle frame of the bicycle (12).

7. The bicycle servicing method according to claim 6, wherein the data transmitted by the transceiver device (10) to the stationary data processing device (16) include geo data, speed data and/or pedal crank data.

8. The bicycle servicing method according to claim 6 or 7, wherein the data acquisition and/or the data processing and/or the data transmission are started automatically when the bicycle is moved.

9. The bicycle servicing method according to any one of claims 6 - 8, wherein an emergency call is issued as soon as data related to a fall are detected in particular by the bicycle data processing device (8).

## Revendications

1. Système d'entretien de bicyclette pour bicyclettes comportant un entraînement électrique alimenté par l'intermédiaire d'une batterie, comportant
- au moins une bicyclette (12) comportant un entraînement électrique alimenté par l'intermédiaire d'une batterie,
- un dispositif d'émission et de réception (10) disposé sur la bicyclette (12),
- un dispositif de traitement de données de bicyclette (8) disposé sur la bicyclette (12) et connecté au dispositif d'émission et de réception (10),
- un dispositif de traitement de données (16) stationnaire pouvant être connecté au dispositif d'émission et de réception (10) par transmission de données mobile (14) pour le traitement de données, en particulier de données spécifiques à la bicyclette et/ou au cycliste, reçues par le dispositif d'émission et de réception (10) et
- un dispositif de distribution de données (18) pouvant être connecté au dispositif de traitement de données (16) par transmission de données mobile (20) pour la distribution de données transmises par le dispositif de traitement de données (16), et/ou
- un autre dispositif de traitement de données (24) pouvant être connecté au dispositif de traitement de données (16) par transmission de données pour le traitement ultérieur des données transmises par le dispositif de traitement de données (16),
**caractérisé en ce que**
- le dispositif de traitement de données de bicyclette (8) est configuré pour prendre en compte et transmettre l'état de chargement de la batterie et des données d'état générales de la batterie de sorte qu'une baisse de la capacité de chargement de la batterie en raison de son âge peut être constatée et qu'un remplacement de la batterie en temps utile peut être proposé à l'utilisateur, et
- le dispositif d'émission et de réception (10) est disposé dans un tube supérieur (34) et/ou un tube de selle (36) de la bicyclette (12) et/ou dans un élément de liaison (38) reliant le tube supérieur (34) au tube de selle (36), et est ainsi intégré dans le cadre de bicyclette de la bicyclette (12).

2. Système d'entretien de bicyclette selon la revendication 1,
**caractérisé en ce que** le dispositif d'émission et de réception (10) présente un modem, en particulier un modem GSM, pour l'émission et la réception de données à destination et en provenance du dispositif de traitement de données (16) stationnaire.

3. Système d'entretien de bicyclette selon la revendication 1 ou 2,
**caractérisé en ce que** le dispositif d'émission et de réception (10) et le dispositif de traitement de données de bicyclette (8) présentent une source d'énergie.

4. Système d'entretien de bicyclette selon l'une des revendications 1 à 3,
**caractérisé en ce que** le dispositif d'émission et de réception présente un module GPS ou est connecté à un module GPS.

5. Système d'entretien de bicyclette selon l'une des revendications 1 à 4,
**caractérisé en ce que** le dispositif de traitement de données de bicyclette (8) est connecté à des capteurs disposés sur la bicyclette pour la réception de données spécifiques à la bicyclette et peut éventuellement être connecté à des capteurs à disposer sur le cycliste pour la réception de données spécifiques au cycliste.

6. Procédé d'entretien de bicyclette pour bicyclettes comportant un entraînement électrique alimenté par l'intermédiaire d'une batterie, comportant les étapes consistant à :
- détecter des données spécifiques à la bicyclette et/ou au cycliste, en particulier au moyen de capteurs disposés sur le cadre de bicyclette et/ou sur le cycliste,
- transmettre les données à un dispositif de traitement de données de bicyclette (8) disposé sur une bicyclette (12) comportant un entraînement électrique alimenté par l'intermédiaire d'une batterie,
- transmettre les données à un dispositif de traitement de données (16) stationnaire au moyen d'un dispositif d'émission et de réception (10) connecté au dispositif de traitement de données de bicyclette (8) par transmission de données mobile (14),
- transmettre les données traitées par le dispositif de traitement de données (16) stationnaire à un dispositif de distribution de données (18) par transmission de données mobile (20) et/ou à un autre dispositif de traitement de données (24) par transmission de données (22), et
- distribuer les données au moyen du dispositif de distribution de données (18) ou traiter ultérieurement les données au moyen de l'autre dispositif de traitement de données (24)
**caractérisé en ce que**
- le dispositif de traitement de données de bicyclette (8) est configuré pour prendre en compte et transmettre l'état de chargement de la batterie et des données d'état générales de la batterie de sorte qu'une baisse de la capacité de chargement de la batterie en raison de son âge peut être constatée et qu'un remplacement de la batterie en temps utile peut être proposé à l'utilisateur, et
- le dispositif d'émission et de réception (10) est disposé dans un tube supérieur (34) et/ou un tube de selle (36) de la bicyclette (12) et/ou dans un élément de liaison (38) reliant le tube supérieur (34) au tube de selle (36), et est ainsi intégré dans le cadre de bicyclette de la bicyclette (12).

7. Procédé d'entretien de bicyclette selon la revendication 6, dans lequel les données transmises au dispositif de traitement de données (16) stationnaire par le dispositif d'émission et de réception (10) comprennent des données géographiques, des données de vitesse et/ou des données de manivelle de pédalier.

8. Procédé d'entretien de bicyclette selon la revendication 6 ou 7, dans lequel la réception de données et/ou le traitement de données et/ou la transmission de données démarrent automatiquement dès que la bicyclette est déplacée.

9. Procédé d'entretien de bicyclette selon l'une des revendications 6 à 8, dans lequel, dès que des données de chute sont détectées, en particulier par le dispositif de traitement de données de bicyclette (8), un appel d'urgence est émis.
